# EUROPÄISCHE PATENTSCHRIFT

(11) **EP 3 472 413 B1**
(45) Veröffentlichungstag und Bekanntmachung des Hinweises auf die Patenterteilung: **26.08.2020**
(21) Anmeldenummer: 17723931.6
(22) Anmeldetag: 26.04.2017
(51) Int. Cl.: E05B 65/52, B62J 9/00, E05B 77/14, E05B 77/48, G07C 9/00, E05B 83/30

(54) **SCHLIESSBAUGRUPPE**
LOCKING ASSEMBLY
ENSEMBLE DE VERROUILLAGE

(30) Priorität: 15.06.2016 DE 102016210591
(43) Veröffentlichungstag der Anmeldung: 24.04.2019
(73) Patentinhaber: Bayerische Motoren Werke Aktiengesellschaft, 80809 München (DE)
(72) Erfinder: REINHART, Peter, 82380 Peissenberg (DE); SIEVERS-PAULSEN, Johann, 85354 Freising (DE)
(86) Internationale Anmeldenummer: PCT/EP2017/059912
(87) Internationale Veröffentlichungsnummer: WO 2017/215825

(56) Entgegenhaltungen:
- DE-A1- 19 942 870
- DE-A1-102009 021 529

## Beschreibung

Die Erfindung betrifft eine Schließbaugruppe für ein motorisiertes Zweirad.

Der Stauraum zur Unterbringung von Gepäckstücken ist bei motorisierten Zweirädern, beispielsweise bei Motorrädern und Motorrollern, bauartbedingt meist auf mehrere Staufächer verteilt. Oft werden abnehmbare Staufächer in Form von seitlich an einem Gepäckträger befestigbaren Koffern oder einem oben auf dem Gepäckträger arretierbaren Topcase eingesetzt. Insbesondere bei abnehmbaren Staufächern ist normalerweise jedes Staufach mit einem eigenen Schließmechanismus versehen, der einen Deckel oder eine Klappe des Staufachs, durch die das innere Volumen des Staufachs zugänglich ist, geschlossen halten kann. Meistens umfasst der Schließmechanismus auch ein schlüsselbetätigbares Schloss, über das das jeweilige Staufach permanent verschließbar ist, damit sein Inhalt nicht zugänglich ist.

Wenn mehrere Staufächer am Fahrzeug angebracht sind, ist es mühsam, ständig die Schlösser aller einzelnen Schließmechanismen auf- und zuzuschließen. Daher ist bei vielen motorisierten Zweirädern zusätzlich zu den jeweiligen einzelnen Schließmechanismen eine Zentralverriegelung vorgesehen, die in ihrem geschlossenen Zustand einen Zugang zu allen Staufächern verhindert und in ihrem offenen Zustand einen Zugang zu sämtlichen Staufächern gleichzeitig freigibt.

Beispiele für Zentralverriegelungen, die mit Schließmechanismen einzelner Staufächer zusammenwirken und deren Öffnen unterbinden können, zeigen die DE 10 2009 021 529 A1 und die DE 199 42 870 A1.

Die Zentralverriegelung kann beispielsweise durch einen am Lenker angeordneten Schalter oder, analog zu einer Zentralverriegelung bei Personenkraftwagen, durch einen Funksender am Fahrzeugschlüssel betätigbar sein.

Bei bisherigen Systemen ist es möglich, die Zentralverriegelung in ihren geschlossenen Zustand zu versetzen, während ein oder mehrere Staufächer noch offen sind, und dann den Deckel des noch offenen Staufachs zu schließen, wobei durch die Schließbewegung der Deckel durch die Zentralverriegelung so verriegelt wird, dass die Verriegelung nur mittels des Fahrzeugschlüssels aufzuheben ist. In diesem Fall kann es zu der unglücklichen Konstellation kommen, dass der Fahrzeugschlüssel unbeabsichtigt im Staufach eingeschlossen wird.

Aufgabe der Erfindung ist es, sicher zu verhindern, dass ein Fahrzeugschlüssel unbeabsichtigt eingeschlossen wird, ohne dabei den Bedienkomfort der Staufächer einzuschränken.

Diese Aufgabe wird gelöst mit einer Schließbaugruppe für ein motorisiertes Zweirad, insbesondere ein Motorrad oder ein Motorroller, wobei die Schließbaugruppe eine Zentralverriegelung für wenigstens ein verriegelbares Staufach aufweist, die einen offenen Zustand hat, in dem ein Zugang zu dem Staufach möglich ist, und einen geschlossenen Zustand, in dem ein Zugang zu dem Staufach verhindert ist, wobei die Zentralverriegelung wenigstens ein bewegliches Sperrelement aufweist, das im geschlossenen Zustand eine erste Position und im offenen Zustand eine zweite Position einnimmt. Außerdem umfasst die Schließbaugruppe einen Schließmechanismus für das Staufach, mittels dem das Staufach geschlossen gehalten wird, wobei der Schließmechanismus einen Öffnungsabschnitt umfasst, der durch eine Handbetätigung längs einer Bahn von einer offenen in eine geschlossene Stellung und umgekehrt bewegbar ist. Das Sperrelement der Zentralverriegelung blockiert im geschlossenen Zustand der Zentralverriegelung in der geschlossenen Stellung des Öffnungsabschnitts in seiner ersten Position den Öffnungsabschnitt gegen ein Bewegen in die offene Stellung und verriegelt ihn damit. Befindet sich jedoch die Zentralverriegelung im geschlossenen Zustand und das Sperrelement der Zentralverriegelung daher in seiner ersten Position, während der Öffnungsabschnitt in der offenen Stellung ist, so blockiert das Sperrelement in seiner ersten Position den Öffnungsabschnitt gegen ein Bewegen in die geschlossene Stellung. Auf diese Weise ist dafür gesorgt, dass der Deckel eines Staufaches nicht verriegelt werden kann, wenn die Zentralverriegelung bereits geschlossen wurde, aber der Deckel noch offen ist.

Eine "Handbetätigung" bezeichnet in diesem Zusammenhang eine mechanische Verschiebe-, Schwenk-, Druck- oder Zugbewegung am Schließmechanismus des jeweiligen Staufaches selbst, bei der der Öffnungsabschnitt entlang einer bestimmten vorgegebenen Bahn bewegt wird, und die unabhängig von der Betätigung der Zentralverriegelung ist.

Normalerweise ist für jedes Staufach ein eigener Schließmechanismus vorgesehen, wenn mehrere Staufächer vorhanden sind. Der Schließmechanismus an den einzelnen Staufächern ist vorzugsweise jeweils separat von und zusätzlich zur Zentralverriegelung vorgesehen und bedient nur das jeweilige Staufach, während die Zentralverriegelung vorzugsweise stets gleichzeitig alle an die Zentralverriegelung angeschlossenen Staufächer des Zweirads ent- oder verriegelt.

Wie herkömmlich bekannt, kann das Staufach beispielsweise ein Topcase oder ein Gepäckkoffer sein, und an einem Rahmen des motorisierten Zweirads arretiert sein, wobei die Arretierung gegebenenfalls lösbar ist, um das Topcase oder den Gepäckkoffer abnehmen zu können. Genauso ist es möglich, dass das Staufach ein Helmfach unter einer anhebbaren Sitzbank ist, ein Handschuhfach oder auch ein Batteriefach oder ein ähnlich geartetes Staufach.

Der Öffnungsabschnitt kann beispielsweise an einem schwenkbar mit einem Körper des Staufachs verbundenen Deckel (oder Klappe) angeordnet sein und insbesondere zusammen mit dem Deckel bewegt werden. Der Öffnungsabschnitt lässt sich beispielsweise an einem Griffbereich ausbilden, an dem der Deckel des Staufachs angehoben wird.

Die Zentralverriegelung umfasst vorzugsweise ein Funkmodul, sodass das Sperrelement der Zentralverriegelung über ein Funksignal dazu veranlasst werden kann, sich in seine erste und seine zweite Position zu bewegen. Der Sender zur Aussendung des Funksignals ist vorzugsweise an einem Fahrzeugschlüssel vorgesehen. So ist es möglich, die Zentralverriegelung auf einfache Weise bequem zu bedienen, auch wenn der Benutzer gerade am hinteren Ende des Fahrzeugs am Staufach steht. Selbstverständlich ist es möglich, zusätzlich einen fahrzeugfesten Schalter, beispielsweise in Nähe des Lenkers, zur Betätigung der Zentralverriegelung vorzusehen.

Sollte die Zentralverriegelung bereits betätigt worden sein, und sich in ihrem geschlossenen Zustand befinden, sodass das Staufach nicht verriegelt werden kann, weil sich der Öffnungsabschnitt nicht in seine geschlossene Stellung bewegen lässt, so kann der Benutzer über das Funkmodul die Zentralverriegelung wieder entsperren, also in ihren offenen Zustand versetzen, wodurch das Sperrelement in die zweite Position bewegt wird, dann das Staufach schließen und den Öffnungsabschnitt in seine geschlossene Stellung bringen und dann über das Funkmodul erneut die Zentralverriegelung in den geschlossenen Zustand versetzen. Durch diesen Ablauf ist sichergestellt, dass sich der Schlüssel beim Verriegeln des Staufaches außerhalb des Staufaches befindet.

In einer möglichen Ausführungsform ist das Sperrelement der Zentralverriegelung ein linear verstellbarer Riegel. Natürlich ist es möglich, dass Sperrelement in beliebiger anderer Form auszubilden, beispielsweise durch einen durch eine Drehbewegung verstellbaren Riegel oder auch durch ein komplexer geformtes Bauteil. Die Gestaltung des Sperrelements obliegt dem Ermessen des Fachmanns, der dieses in Abhängigkeit mit dem jeweilig verwendeten Schließmechanismus geeignet auswählen kann.

Das Sperrelement der Zentralverriegelung ist in einer möglichen Ausführungsform auch dasjenige Bauteil, das im geschlossenen Zustand der Zentralverriegelung verhindert, dass das Staufach geöffnet werden kann. Dies kann beispielsweise dadurch erreicht werden, dass der Öffnungsabschnitt eine Haltestruktur aufweist und das Sperrelement in seiner ersten Stellung die Haltestruktur hintergreift, wenn sich der Öffnungsabschnitt in seiner geschlossenen Stellung befindet.

Um ein Schließen des Öffnungsabschnitts zu blockieren, wenn sich der Öffnungsabschnitt in seiner offenen Stellung befindet, kommt vorzugsweise das Sperrelement der Zentralverriegelung in seiner ersten Position in Anlage an einer rückwärtigen Fläche der Haltestruktur. Auf diese Weise blockiert das Sperrelement die Bewegung des Öffnungsabschnitts in die geschlossene Stellung, sodass der Schließmechanismus des Staufachs nicht verriegelt werden kann. Das Schließen des Öffnungsabschnittes zum Verriegeln des Staufachs ist dabei mechanisch unterbunden. Vorzugsweise kann ein Deckel des Staufachs aber komplett auf dem Rand eines Körpers des Staufachs aufliegen, und den Innenraum des Staufachs abdecken.

Die Haltestruktur kann beliebig ausgebildet sein, beispielsweise als ein massiver Vorsprung oder Steg mit im Wesentlichen parallelen rückwärtigen und frontseitigen Flächen, kann aber auch ein Bauteil mit einer komplexeren Struktur sein, sodass die Anlageflächen des Sperrelements in der offenen und der geschlossenen Stellung durch weitere Elemente beabstandet sind.

Um den ungehinderten Zugang zum Staufach zu erlauben, gibt das Sperrelement der Zentralverriegelung vorzugsweise in seiner zweiten Position den Öffnungsabschnitt frei, sodass dieser durch Handbetätigung in seine offene Stellung bewegbar ist.

Im offenen Zustand der Zentralverriegelung kann daher der Öffnungsabschnitt des Staufachs nach Belieben in seine offene und seine geschlossene Stellung gebracht werden.

Bei Betätigen der Zentralverriegelung wird das Sperrelement in die erste Position bewegt, in der es den Öffnungsabschnitt verriegelt, wenn sich dieser in der geschlossenen Stellung befindet, oder den Öffnungsabschnitt gegen ein manuelles Schließen blockiert, wenn sich dieser sich noch in seiner offenen Stellung befindet.

Erfindungsgemäß blockiert also das Sperrelement der Zentralverriegelung den Öffnungsabschnitt des Schließmechanismus eines einzelnen Staufachs gegen ein Schließen durch Handbetätigung, wenn die Zentralverriegelung in ihrem geschlossenen Zustand ist, während der Öffnungsabschnitt noch in der offenen Stellung ist.

Der Schließmechanismus kann ein schlüsselbetätigbares Schloss zusätzlich zum Öffnungsabschnitt und zur Zentralverriegelung aufweisen, das separat von der Zentralverriegelung vorgesehen ist und das eine zusätzliche Verriegelung des Staufachs bildet. Die Handbetätigung des Öffnungsabschnitts ist jedoch immer mit einer direkten manuellen Einwirkung auf den Schließmechanismus verbunden, unter die nicht das Betätigen des Schlosses durch Drehen eines Schlüssels fällt.

Die normale Verriegelung des Staufachs durch die Zentralverriegelung ist vorzugsweise unabhängig von einem schlüsselbetätigten, auf- oder abgeschlossenen, Zustand des Schlosses. Es ist aber denkbar, dass die Verriegelung durch die Zentralverriegelung durch eine Schlüsselbetätigung des Schlosses aufgehoben werden kann, d.h. dass das Sperrelement durch Drehen des Schlüssels in die zurückgezogene, zweite Stellung bewegt werden kann.

Genauso kann es möglich sein, durch eine Schlüsselbetätigung des Schlosses das jeweilige Staufach unabhängig von der Zentralverriegelung zu versperren. Diese Situationen betreffen jedoch nicht die Erfindung, die sich darauf bezieht, dass der Deckel eines Staufachs durch die Zentralverriegelung erst dann arretiert werden kann, wenn sich der Öffnungsabschnitt des jeweiligen Staufachs in seiner geschlossenen Stellung befindet, um ein versehentliches Zuschlagen des Staufaches bei bereits geschlossener Zentralverriegelung zu verhindern.

Der Öffnungsabschnitt kann bei der Handbetätigung unmittelbar selbst bewegt, beispielsweise verschwenkt, werden. Es ist aber z.B. auch möglich, dass der Benutzer das Schloss des Schließmechanismus durch eine Druckfunktion in den Mechanismus hineinschieben muss, damit der Öffnungsabschnitt durch Federvorspannung in die offene Stellung bewegt wird.

Der Schließmechanismus umfasst beispielsweise einen schwenkbaren Verschlusshebel, welcher den Öffnungsabschnitt aufweist und welcher ein Gegenstück des Schließmechanismus in der geschlossenen Stellung formschlüssig hintergreift. Durch das Hintergreifen des Gegenstücks kann der Öffnungsabschnitt und somit der Verschlusshebel und der Deckel des Staufaches temporär fixiert sein, sodass der Deckel nicht angehoben werden kann. Dies sorgt für eine Arretierung des Deckels des Staufachs. Diese Verriegelung ist jedoch vorzugsweise durch ein Betätigen des Öffnungsabschnitts, beispielsweise durch Anheben des Verschlusshebels oder Betätigung der beschriebenen Druckfunktion an einem Schloss wieder zu lösen, ohne dass die Verwendung eines passenden Fahrzeugschlüssels notwendig wäre.

Zu einem Hintergreifen des Gegenstücks kann es auch kommen, wenn das Schloss durch eine Schlüsselbetätigung in seine abgeschlossene Stellung gebracht wird. In diesem Fall ist jedoch der Fahrzeugschlüssel erforderlich, um die Verriegelung zu lösen.

Die Erfindung wird nachfolgend anhand eines Ausführungsbeispiels mit Bezug auf die beigefügten Zeichnungen näher beschrieben. In den Zeichnungen zeigen:
- Figur 1 eine schematische perspektivische Darstellung eines Schließmechanismus einer erfindungsgemäßen Schließbaugruppe;
- Figur 2 eine schematische Schnittansicht einer erfindungsgemäßen Schließbaugruppe in einem geschlossenen Zustand einer Zentralverriegelung und einer geschlossenen Stellung eines Öffnungsabschnitts des Schließmechanismus aus Figur 1; und
- Figur 3 eine schematische Schnittansicht einer erfindungsgemäßen Schließbaugruppe, bei der die Zentralverriegelung in ihrem geschlossenen Zustand ist, während der Öffnungsabschnitt des Schließmechanismus in seiner offenen Stellung ist.

Die Figuren zeigen eine Schließbaugruppe 10 eines nicht näher dargestellten motorisierten Zweirads, beispielsweise eines Motorrads oder eines Motorrollers.

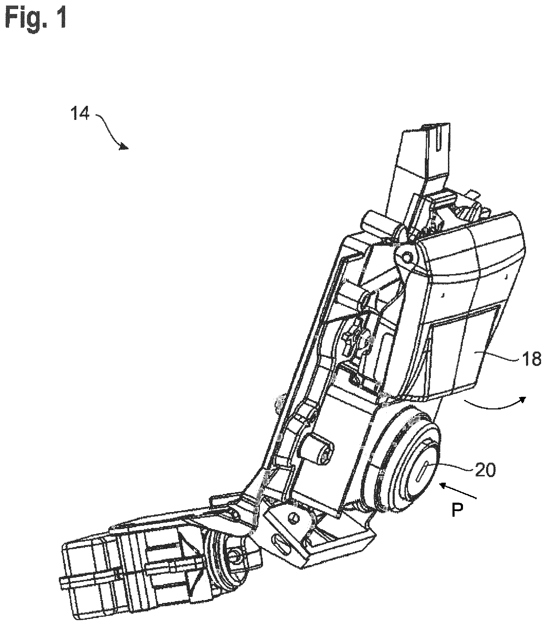

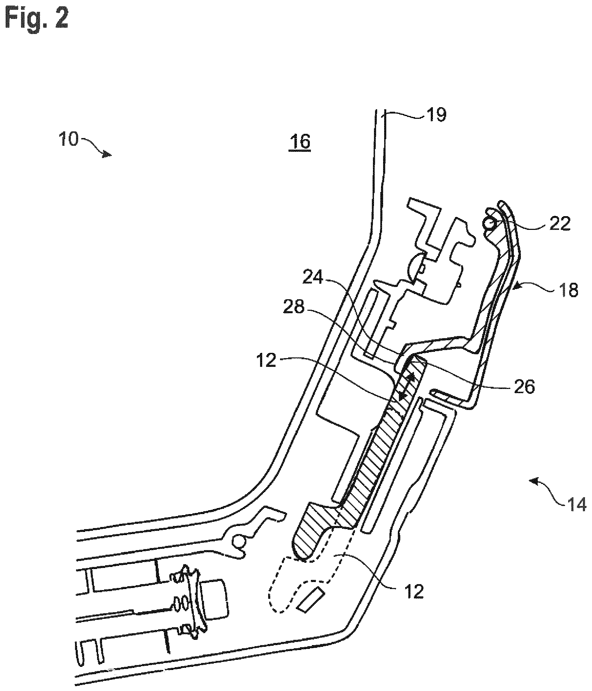

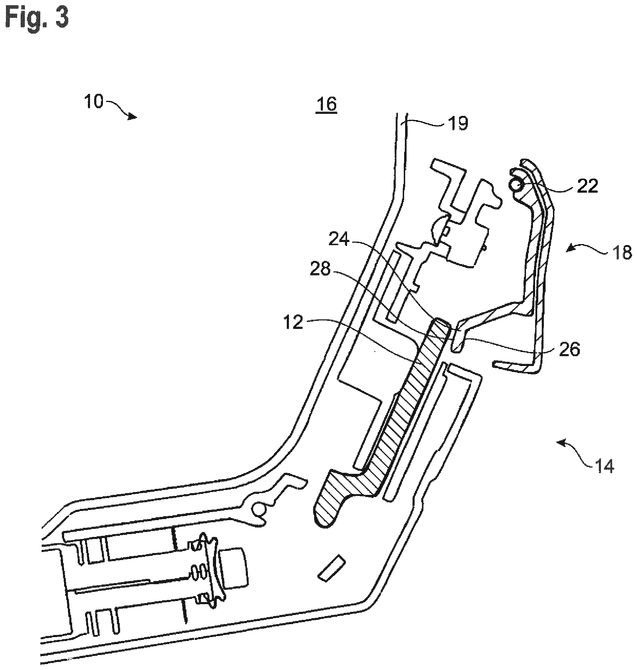

Die Schließbaugruppe 10 umfasst eine Zentralverriegelung, von der lediglich ein Sperrelement 12 gezeigt ist (siehe Figuren 2 und 3), sowie einen Schließmechanismus 14, der insbesondere in Figur 1 gezeigt ist.

An dem motorisierten Zweirad ist wenigstens ein Staufach 16 vorgesehen (in den Figuren 2 und 3 angedeutet), an dem der Schließmechanismus 14 angeordnet ist. Das Staufach 16 ist beispielsweise ein Topcase, der auf einem Gepäckträger des motorisierten Zweirads angebracht ist, oder ein Gepäckkoffer, seitlich am Gepäckträger arretiert werden kann. Es kann sich bei dem Staufach 16 aber auch um ein fahrzeugfest vorgesehenes Staufach handeln, beispielsweise um ein Helmfach unter einer anhebbaren Sitzbank.

Die Zentralverriegelung ist ein zentrales Verriegelungssystem, das stets den Zugang zu sämtlichen an die Zentralverriegelung angeschlossenen Staufächern 16 des Fahrzeugs gleichzeitig freigibt oder blockiert. Über einen Betätigungsschalter, der beispielsweise im Bereich des Lenkers des motorisierten Zweirads vorgesehen sein kann, oder einen Funksender an einem Fahrzeugschlüssel, der mit einem Funkmodul der Zentralverriegelung kommuniziert, können die Sperrelemente 12 in sämtlichen Schließmechanismen 14 aller Staufächer 16 gleichzeitig in eine erste Position bewegt werden, die sie in einem geschlossenen Zustand der Zentralverriegelung einnehmen, sowie in eine zweite Position, die sie in einem offenen Zustand der Zentralverriegelung innehaben. In Figur 2 ist die erste Position des Sperrelements 12 mit durchgezogenen Linien dargestellt, während die zweite Position mit gestrichelten Linien angedeutet ist.

Der Schließmechanismus 14 ist zusätzlich zur Zentralverriegelung vorgesehen und von dieser separat, und in der Regel ist jedes einzelne Staufach 16 mit einem eigenen Schließmechanismus 14 versehen.

Der Schließmechanismus 14 umfasst einen Öffnungsabschnitt 18, der in diesem Beispiel als ein Schwenkhebel ausgebildet ist und der mit einem Deckel (oder einer Klappe) des Staufachs 16 verbunden ist, durch dessen Anheben das Innenvolumen des Staufachs 16 zugänglich wird. Der Deckel ist schwenkbar mit einem Körper 19 des Staufachs verbunden. Der Öffnungsabschnitt 18 kann hier unabhängig von diesem Deckel bewegt werden, ist aber an dem Deckel befestigt und wird mit dieser zusammen angehoben oder abgesenkt.

Figur 2 zeigt den Öffnungsabschnitt 18 in dessen geschlossener Stellung, und Figur 3 zeigt den Öffnungsabschnitt 18 in der offenen Stellung. Der Öffnungsabschnitt 18 wird von der geschlossenen Stellung in die offenen Stellung entlang einer vorgegebenen Bahn bewegt.

In der offenen Stellung ist der Öffnungsabschnitt 18 insbesondere von einem Gegenstück am Schließmechanismus 14 entriegelt, dass er in der geschlossenen Stellung formschlüssig hintergreift, sodass der Deckel des Staufachs 16 angehoben werden kann.

In diesem Ausführungsbeispiel umfasst der Schließmechanismus 14 außerdem ein Schloss 20, das mit einem Fahrzeugschlüssel betätigt werden kann. Der Schließmechanismus 14 umfasst zudem eine Druckfunktion, bei der das Schloss 20 im aufgeschlossenen Zustand durch einen Bewegung in Richtung des Pfeils P in Figur 1 verschoben werden kann. Durch diese Bewegung wird z.B. das Gegenstück bewegt und der Öffnungsabschnitt 18 durch eine Federvorspannung in die offene Stellung um eine Schwenkachse 22 nach außen verschwenkt (nicht näher dargestellt).

Es wäre natürlich auch möglich, eine beliebige andere Art der Entriegelung des Öffnungsabschnitts 18 durch die Schließmechanismus 14 vorzusehen, oder aber, den Öffnungsabschnitt 18 in beliebiger anderer Art zu gestalten.

Beispielsweise könnte der Öffnungsabschnitt 18 direkt von Hand verschwenkt werden, oder es könnte auf einen separaten Schwenkhebel verzichtet werden, und der Deckel des Staufachs 16 könnte alleine durch Betätigen der Druckfunktion am Schloss 20 durch Federvorspannung leicht geöffnet werden, um den Zugang zum Staufach 16 zu ermöglichen.

In jedem Fall ist bei aufgeschlossenem Schloss 20 und bei offener Zentralverriegelung der Fahrzeugschlüssel nicht erforderlich, um die Verriegelung des Öffnungsabschnitts 18 am Schließmechanismus 14 zu lösen.

In diesem Beispiel weist der Öffnungsabschnitt 18 eine Haltestruktur 24 auf, die hier als massiver Steg mit einer frontseitigen Fläche 26 und eine rückwärtigen Fläche 28 ausgebildet ist. Selbstverständlich könnte die Haltestruktur 24 auch eine komplexere Gestalt aufweisen.

Das Sperrelement 12 der Zentralverriegelung ist in diesem Fall als linear verschiebbarer Riegel ausgebildet (die Bewegung des Sperrelements 12 zwischen der ersten und der zweiten Position ist angedeutet durch den Pfeil in Figur 2).

In dem in Figur 2 gezeigten Zustand, in dem die Zentralverriegelung in ihrem geschlossenen Zustand ist und somit das Sperrelement 12 in seiner ersten Position, während der Öffnungsabschnitt 18 in seiner geschlossenen Stellung ist, hintergreift das Sperrelement 12 den Öffnungsabschnitt 18. Die frontseitige Fläche 26 der Haltestruktur 24 ist in Anlage am Sperrelement 12, und der Öffnungsabschnitt 18 ist damit gegen eine Schwenkbewegung nach außen in die offene Stellung blockiert. Der Zugang zum Staufach 16 ist verhindert, und der Deckel des Staufachs 16 ist verriegelt. Dies ist die normale Situation, wenn der Benutzer sein Fahrzeug verlässt.

Wird ein Zugang zum Staufach 16 benötigt, so wird die Zentralverriegelung betätigt und aus dem geschlossenen Zustand in den offenen Zustand überführt, wobei das Sperrelement 12 in seine zweite Position zurückgezogen wird (siehe Figur 2). Durch die Anlage an das Gegenstück (nicht gezeigt) bleibt der Öffnungsabschnitt 18 noch in seiner geschlossenen Stellung, kann aber durch eine Handbetätigung, beispielsweise durch Betätigen der Druckfunktion am Schloss 20, in seine offene Stellung überführt werden. Das Staufach 16 ist somit prinzipiell zugänglich. Dies entspricht der normalen Situation, wenn der Benutzer Gegenstände aus dem Staufach 16 entnehmen oder in dieses hineinlegen möchte.

Figur 3 zeigt die Situation, in der das Staufach 16 noch geöffnet ist und sich daher der Öffnungsabschnitt 18 noch in seiner offenen Stellung befindet, jedoch die Zentralverriegelung bereits betätigt wurde und ihren geschlossenen Zustand eingenommen hat, sodass das Sperrelement 12 bereits wieder in seiner ersten Position ist.

In diesem Fall ist es nicht möglich, den Schließmechanismus 14 des Staufachs 16 zu verriegeln, da der Öffnungsabschnitt 18 nicht in seine geschlossene Stellung zurückbewegt werden kann. Auf dem Weg dahin kommt die rückwärtige Fläche 28 der Haltestruktur 24 in Anlage an das Sperrelement 12, sodass ein vollständiges Einklappen des Öffnungsabschnitts 18 in die geschlossene Stellung mechanisch verhindert wird.

Es ist erst möglich, dass Staufach 16 zu verriegeln, wenn der Benutzer die Zentralverriegelung erneut betätigt und in den offenen Zustand überführt, insbesondere durch Betätigung des Funksenders am Fahrzeugschlüssel. Erst, wenn das Sperrelement 12 wieder in seine zweite Position zurückgezogen ist, kann der Öffnungsabschnitt 18 durch eine Handbetätigung vollständig eingeklappt und in seine geschlossene Stellung überführt werden. Jetzt kann der Benutzer erneut die Zentralverriegelung betätigen, die dann ihren geschlossenen Zustand einnimmt, wobei der Benutzer jetzt normalerweise den Fahrzeugschlüssel in der Hand hält, dieser also nicht unbeabsichtigt im Staufach 16 eingeschlossen werden kann.

## Patentansprüche

1. Schließbaugruppe (10) für ein motorisiertes Zweirad, mit einer Zentralverriegelung für wenigstens ein verriegelbares Staufach (16), die einen offenen Zustand hat, in dem ein Zugang zu dem Staufach (16) möglich ist, und einen geschlossenen Zustand, in dem ein Zugang zu dem Staufach (16) verhindert ist, und die wenigstens ein bewegliches Sperrelement (12) aufweist, das im geschlossenen Zustand eine erste Position und im offenen Zustand eine zweite Position einnimmt, sowie einem Schließmechanismus (14) für das Staufach (16), mittels dem das Staufach (16) geschlossen gehalten wird und der einen Öffnungsabschnitt (18) umfasst, der durch eine Handbetätigung längs einer Bahn von einer offenen in eine geschlossene Stellung und umgekehrt bewegbar ist, wobei das Sperrelement (12) der Zentralverriegelung im geschlossenen Zustand der Zentralverriegelung in der geschlossenen Stellung des Öffnungsabschnitts (18) in seiner ersten Position den Öffnungsabschnitt (18) gegen ein Bewegen in die offene Stellung blockiert und verriegelt, **dadurch gekennzeichnet, dass** das Sperrelement (12) der Zentralverriegelung im geschlossenen Zustand der Zentralverriegelung in der offenen Stellung des Öffnungsabschnitts (18) in seiner ersten Position den Öffnungsabschnitt (18) gegen ein Bewegen in die geschlossene Stellung blockiert.

2. Schließbaugruppe nach Anspruch 1, **dadurch gekennzeichnet, dass** das Staufach (16) ein Topcase oder ein Gepäckkoffer ist, der an einem Rahmen des motorisierten Zweirads arretiert ist.

3. Schließbaugruppe nach einem der vorhergehenden Ansprüche, **dadurch gekennzeichnet, dass** der Öffnungsabschnitt (18) an einem schwenkbar mit einem Körper (19) des Staufachs (16) verbundenen Deckel angeordnet ist.

4. Schließbaugruppe nach einem der vorhergehenden Ansprüche, **dadurch gekennzeichnet, dass** die Zentralverriegelung ein Funkmodul umfasst, sodass das Sperrelement (12) der Zentralverriegelung über ein Funksignal dazu veranlasst werden kann, sich in seine erste und seine zweite Position zu bewegen.

5. Schließbaugruppe nach einem der vorhergehenden Ansprüche, **dadurch gekennzeichnet, dass** das Sperrelement (12) ein linear verstellbarer Riegel ist.

6. Schließbaugruppe nach einem der vorhergehenden Ansprüche, **dadurch gekennzeichnet, dass** der Öffnungsabschnitt (18) eine Haltestruktur (24) aufweist, wobei das Sperrelement (12) der Zentralverriegelung in seiner ersten Position die Haltestruktur (24) hintergreift, wenn sich der Öffnungsabschnitt (18) in seiner geschlossenen Stellung befindet.

7. Schließbaugruppe nach Anspruch 6, **dadurch gekennzeichnet, dass** das Sperrelement (12) der Zentralverriegelung in seiner ersten Position in Anlage an einer rückwärtigen Fläche (28) der Haltestruktur (24) kommt, um ein eine Bewegung des Öffnungsabschnitts (18) in die geschlossenen Stellung zu blockieren, wenn sich der Öffnungsabschnitt (18) in seiner offenen Stellung befindet.

8. Schließbaugruppe nach einem der vorhergehenden Ansprüche, **dadurch gekennzeichnet, dass** das Sperrelement (12) der Zentralverriegelung in seiner zweiten Position den Öffnungsabschnitt (18) freigibt, so dass dieser durch Handbetätigung in seine offene Stellung bewegbar ist.

9. Schließbaugruppe nach einem der vorhergehenden Ansprüche, **dadurch gekennzeichnet, dass** ein schlüsselbetätigbares Schloss (20) zusätzlich zur Zentralverrieglung und separat von dieser vorgesehen ist, das eine zusätzliche Verriegelung des Staufachs (16) bildet.

10. Schließbaugruppe nach einem der vorhergehenden Ansprüche, **dadurch gekennzeichnet, dass** der Schließmechanismus (14) einen schwenkbaren Verschlusshebel umfasst, welcher den Öffnungsabschnitt (18) aufweist und welcher ein Gegenstück des Schließmechanismus (14) in der geschlossenen Stellung formschlüssig hintergreift.

## Claims

1. Locking assembly (10) for a motorised vehicle, having a central locking device for at least one lockable stowage compartment (16), said central locking device having an open state, in which access to the stowage compartment (16) is possible, and a closed state, in which access to the stowage compartment (16) is prevented, and having at least one moveable arresting element (12), which assumes a first position in the closed state and a second position in the open state, and having a closing mechanism (14) for the stowage compartment (16), said closing mechanism keeping the stowage compartment (16) closed and comprising an opening portion (18), which can be moved by manual actuation, along a path from an open position into a closed position, and vice versa,
wherein, in the closed state of the central locking device and with the opening portion (18) in the closed position, the arresting element (12) in its first position, said arresting element belonging to the central locking device, blocks the opening portion (18) against movement into the open position and locks the same, **characterized in that**,
in the closed state of the central locking device and with the opening portion (18) in the open position, the arresting element (12) in its first position, said arresting element belonging to the central locking device, blocks the opening portion (18) against movement into the closed position.

2. Locking assembly according to Claim 1, **characterized in that** the stowage compartment (16) is a top case or a box, which is secured on a frame of the motorised two-wheeled vehicle.

3. Locking assembly according to either of the preceding claims, **characterized in that** the opening portion (18) is arranged on a cover which is connected to a body (19) of the stowage compartment (16) in a pivotable manner.

4. Locking assembly according to one of the preceding claims, **characterized in that** the central locking device comprises a radio module, and therefore the arresting element (12) of the central locking device can be prompted to move into its first and its second positions via a radio signal.

5. Locking assembly according to one of the preceding claims, **characterized in that** the arresting element (12) is a linearly adjustable catch.

6. Locking assembly according to one of the preceding claims, **characterized in that** the opening portion (18) has a retaining structure (24), wherein, in its first position, the arresting element (12) of the central locking device engages behind the retaining structure (24) when the opening portion (18) is located in its closed position.

7. Locking assembly according to Claim 6, **characterized in that**, in its first position, the arresting element (12) of the central locking device comes into abutment against a rear surface (28) of the retaining structure (24) in order to block movement of the opening portion (18) into the closed position when the opening portion (18) is located in its open position.

8. Locking assembly according to one of the preceding claims, **characterized in that**, in its second position, the arresting element (12) of the central locking device frees the opening portion (18), and therefore the latter can be moved by manual actuation into its opening position.

9. Locking assembly according to one of the preceding claims, **characterized in that** a key-actuable lock (20) is provided in addition to the central locking device and separately therefrom and forms an additional locking device of the stowage compartment (16).

10. Locking assembly according to one of the preceding claims, **characterized in that** the closing mechanism (14) comprises a pivotable closure lever, which has the opening portion (18) and engages in a form-fitting manner behind a counterpart of the closing mechanism (14) in the closed position.

## Revendications

1. Module de fermeture (10) pour un deux-roues motorisé,
comprenant un verrouillage central pour au moins un compartiment de rangement verrouillable (16), qui présente un état ouvert dans lequel un accès au compartiment de rangement (16) est possible, et un état fermé dans lequel un accès au compartiment de rangement (16) est empêché, et qui présente au moins un élément de blocage mobile (12), qui, dans l'état fermé, adopte une première position et, dans l'état ouvert, adopte une deuxième position, ainsi qu'un mécanisme de fermeture (14) pour le compartiment de rangement (16), au moyen duquel le compartiment de rangement (16) est maintenu fermé et qui comprend une portion d'ouverture (18) qui peut être déplacée par un actionnement manuel le long d'une voie d'une position ouverte dans une position fermée et inversement,
l'élément de blocage (12) du verrouillage central, dans l'état fermé du verrouillage central, dans la position fermée de la portion d'ouverture (18) dans sa première position, bloquant et verrouillant la portion d'ouverture (18) contre un déplacement dans la position ouverte,
**caractérisé en ce que**
l'élément de blocage (12) du verrouillage central, dans l'état fermé du verrouillage central, dans la position ouverte de la portion d'ouverture (18) dans sa première position, bloque la portion d'ouverture (18) contre un déplacement dans la position fermée.

2. Module de fermeture selon la revendication 1, **caractérisé en ce que** le compartiment de rangement (16) est un Topcase ou un coffre à bagages qui est fixé sur un cadre du deux-roues motorisé.

3. Module de fermeture selon l'une quelconque des revendications précédentes, **caractérisé en ce que** la portion d'ouverture (18) est disposée au niveau d'un couvercle connecté de manière pivotante à un corps (19) du compartiment de rangement (16).

4. Module de fermeture selon l'une quelconque des revendications précédentes, **caractérisé en ce que** le verrouillage central comprend un module radio de telle sorte que l'élément de blocage (12) du verrouillage central puisse être amené par le biais d'un signal radio à se déplacer dans sa première et dans sa deuxième position.

5. Module de fermeture selon l'une quelconque des revendications précédentes, **caractérisé en ce que** l'élément de blocage (12) est un verrou déplaçable linéairement.

6. Module de fermeture selon l'une quelconque des revendications précédentes, **caractérisé en ce que** la portion d'ouverture (18) présente une structure de retenue (24), l'élément de blocage (12) du verrouillage central, dans sa première position, venant en prise par l'arrière avec la structure de retenue (24) lorsque la portion d'ouverture (18) se trouve dans sa position fermée.

7. Module de fermeture selon la revendication 6, **caractérisé en ce que** l'élément de blocage (12) du verrouillage central, dans sa première position, vient en appui contre une surface arrière (28) de la structure de retenue (24) afin de bloquer un déplacement de la portion d'ouverture (18) dans la position fermée, lorsque la portion d'ouverture (18) se trouve dans sa position ouverte.

8. Module de fermeture selon l'une quelconque des revendications précédentes, **caractérisé en ce que** l'élément de blocage (12) du verrouillage central, dans sa deuxième position, libère la portion d'ouverture (18) de telle sorte que celle-ci puisse être déplacée par un actionnement manuel dans sa position ouverte.

9. Module de fermeture selon l'une quelconque des revendications précédentes, **caractérisé en ce qu'**une serrure à commande par clé (20) est prévue en plus du verrouillage central et séparément de celui-ci, laquelle forme un verrouillage supplémentaire du compartiment de rangement (16).

10. Module de fermeture selon l'une quelconque des revendications précédentes, **caractérisé en ce que** le mécanisme de fermeture (14) comprend un levier de fermeture pivotant qui présente la portion d'ouverture (18) et qui vient en prise par l'arrière par correspondance de formes avec une pièce conjuguée du mécanisme de fermeture (14) dans la position fermée.
